# EUROPEAN PATENT SPECIFICATION

(11) **EP 4 015 814 B1**
(45) Date of publication and mention of the grant of the patent: **14.08.2024**
(21) Application number: 20461598.3
(22) Date of filing: 17.12.2020
(51) Int. Cl.: F02M 37/36, B01D 29/23, F02M 37/46, F02M 37/48, B01D 35/147, B01D 35/153, F02M 37/00

(54) **FUEL FILTER ASSEMBLY**
KRAFTSTOFFFILTERANORDNUNG
ENSEMBLE FILTRE À CARBURANT

(43) Date of publication of application: 22.06.2022
(73) Proprietor: Collins Engine Nozzles, Inc., West Des Moines, IA 50265 (US)
(72) Inventor: Jedlinski, Marek, 51-317 Wroclaw (PL); Bujewicz, Maciej, 51-317 Wroclaw (PL)
(74) Representative: Dehns

(56) References cited:
- DE-A1- 102013 223 352
- DE-A1- 102018 221 261
- US-A- 3 235 085
- US-A- 4 512 884
- US-A- 4 617 116
- US-A- 5 881 699
- US-A1- 2001 004 061
- US-A1- 2005 252 847
- US-A1- 2015 128 906
- US-A1- 2020 325 863

## Description

### FIELD OF THE INVENTION

This disclosure relates to fuel filters and in particular to fuel filters having a filter bypass valve and shutoff valves on the fuel inlet and outlets.

### BACKGROUND

Known fuel filters comprise a filter bowl suitable for housing a filter element, a filter element, and a manifold to which the filter bowl may be reversibly attached. The manifold includes fuel inlet and outlet ports. In combination the manifold, filter bowl and the filter element define a flow path in which fuel flows into the manifold through the fuel inlet port, through the filter element and out of the manifold via the fuel outlet port.

DE 102018221261 A1 relates to an assembly for a filter device, which includes a pre-assembly assembly and a fluid cell. The pre-assembly assembly comprising a filter element and a filter housing. DE 102018221261 A1 further relates to a filter device with such an assembly for filtering a fluid, in particular oil, additives, fuel, water or coolant; a method for assembling the filter device; and an internal combustion engine with such a filter device.

DE 102013223352 A1 relates to a filter element and a valve assembly which can be used together in the housing of a fluid filter on the one hand and separated from one another on the other hand. This allows the valve assembly to be reused when the filter element is replaced.

US 5881699 A discloses a diesel fuel recirculating manifold for a fuel delivery system. The system selectively provides warm return fuel to unclog (de-wax or de-ice) the components of the fuel system, such as the fuel filter, after a cold start. Once clogging is no longer an issue, the warm fuel is directed to the fuel tank.

US 2020/325863 A1 relates to a recirculation module for a fuel prefilter unit for filtering fuel supplied to an internal combustion engine and a fuel prefilter unit with such a recirculation module.

US 2005/252847 A1 relates to a fuel module comprising a fuel tank and a fuel filter. The fuel tank comprises a wall which encloses the volume of the fuel tank, the wall has an opening in the area of the fuel filter, and the fuel filter is sealed to the wall in the vicinity of the opening. The fuel module is for filtering and supplying diesel fuel to an auto-ignition engine, i.e. diesel engine.

US 3235085 A relates to a filter unit, and more particularly to an oil filter of the spin-on, throw away type which is generally mounted on the engine block of an internal combustion engine and the like.

### SUMMARY

According to an aspect of this disclosure there is provided a fuel filter comprising a manifold, a connector element, a filter bowl, a filter element, an inlet shutoff valve, an outlet shutoff valve, an inlet port, an inlet conduit, an outlet port, an outlet conduit and a relief valve. The connector element is fixed to the manifold, and the filter bowl is reversibly fixed to the connector element. The connector element is adapted to engage with the filter element. The filter bowl is adapted to reversibly receive the filter element and is so configured that when the filter element is located within the filter bowl and the filter bowl attached to the connection element the filter element divides the space defined by the connector element and filter bowl into an inlet filter chamber and an outlet filter chamber. The inlet port is incorporated in the manifold, and the inlet port and inlet filter chamber are in fluid communication via the inlet conduit. The outlet port is incorporated in the manifold and the outlet port and outlet filter chamber are in fluid communication via the outlet conduit. The inlet shutoff valve is biased by a biasing means into a closed configuration which prevents fuel flowing along the inlet conduit when fuel in the inlet conduit has a fuel pressure below a predetermined value. The outlet shutoff valve is biased by a biasing means into a closed configuration which prevents fuel flowing along the outlet conduit when the fuel in the outlet filter chamber has a fuel pressure below a predetermined value. The relief valve is biased by a biasing means into a closed configuration in which fuel flowing between the inlet filter chamber and outlet filter chamber passes through the filter element, and movement of the relief valve into an open configuration allows fuel to flow between the inlet filter chamber and the outlet filter chamber via the relief valve without the fuel passing through the filter element, and the relief valve is caused to move into its open configuration from its closed configuration when the difference between the fuel pressure in the filter inlet chamber and the filter outlet chamber is equal to or greater than a predetermined value.

When the fuel is not being pumped through a fuel supply system of which the fuel filter of the present disclosure is a part, for example when the fuel pump is not turned on, the fuel in the inlet passage, outlet passage, and in the filter as a whole is not pressurised or at a residual pressure, for example hydrostatic pressure. The predetermined fuel pressure values at which the inlet shutoff valve and the outlet shutoff valves move to their open configurations are greater than the no pressure or the residual pressure.

An advantage of the fuel filter of the present disclosure is that when the filter bowl is detached from the connector element the inlet and outlet shutoff valves are both in or will move to their closed configurations with the result that fuel will not leak out of the connector element, manifold or fuel lines leading to and from the fuel inlet and fuel outlet ports respectively. This means that when the fuel filter is to be serviced, for example by changing the filter element, the fuel lines do not need to be detached from the manifold or drained. This advantage has the result that servicing the fuel filter of the disclosure can be simple and swift and as a result costs associated with such a servicing can be minimised.

A further advantage of the fuel filter of the present disclosure is that the connector element can be adapted to be attached to existing known configurations of fuel filter manifolds. This has the result that a fuel filter of the current disclosure can be fitted to an existing mechanism which incorporates a fuel filter, for example a gas turbine engine for use in an aircraft, without having to change the manifold.

A further advantage of the fuel filter of the present disclosure is that mechanically the fuel filter is relatively simple and can be made to a compact design. This can lead to a high degree of reliability and, again, reduced maintenance costs.

The filter bowl is configured to have the form of a bowl with an open mouth. In some embodiments of the above embodiments of the current disclosure the filter bowl is connected to the connector element via a screw thread adjacent to the open mouth of the filter bowl and a corresponding thread on the connector element. In some other embodiments the filter bowl is connected to the connector element via other mechanical engagement means.

The maximum rate of flow of fuel through the fuel filter can be predetermined by designing the filter element and filter bowl to allow a maximum predetermined rate of fuel flow to occur. A non-limiting example of such a maximum desired fuel flow is 20 000pph (2.520 Kg/s).

In some embodiments of the above embodiments the fuel filter further comprises a pedestal, in which the filter element has a first end which is adapted to engage with the connector element, and a second end which is adapted to engage with the pedestal. The pedestal is so configured that it spaces the second end of the filter from the filter bowl and permits the flow of fuel between the outlet filter chamber and the volume between the second end of the filter and the bowl.

In some embodiments of the above embodiments the relief valve is also engaged with the pedestal and fuel flowing between the inlet filter chamber and the outlet filter chamber via the relief valve flows through the volume between the second end of the filter and the bowl. In some embodiments, the pedestal defines and aperture in which the relief valve is engaged. In some embodiments, the engagement between the pedestal and the relief valve is a sealing engagement and the pedestal or relief valve include a seal element.

In some embodiments of the above embodiments the relief valve comprises a sleeve, a spool, and a biasing means, in which the sleeve defines an open ended volume. The sleeve is formed from a sleeve body in which at least one flow path extends through the sleeve body between a first end which comprises a first aperture opening onto the open ended volume and a second end which comprises an aperture opening out of the sleeve body at a position spaced from the first aperture. The spool is configured to be a sliding fit with the face of the sleeve body defining at least part of the open ended volume, and movement of the spool from a first position in the open ended volume in which it fully overlies the first aperture to a second position in the open ended volume in which the spool does not fully overlie the aperture is movement of the relief valve from a closed configuration to an open configuration.

In some embodiments of the above embodiments the first end of the flow path is close to but spaced from one end of the sleeve body, and the second end of the flow path opens out of the other end of the sleeve body.

In some embodiments of the above embodiments the sleeve is longitudinally extending from the pedestal into the inlet filter chamber, the aperture at the first end of the flow path is close to but spaced from the end of the sleeve body extending into the inlet filter aperture, and the second end of the flow path opens out of the end of the sleeve body engaged with the pedestal. In other embodiments, the second end of the flow path opens out of the first or second face of the sleeve adjacent to or close to the end of the sleeve body engaged with the pedestal into the open ended volume or the volume between the second end of the filter and the bowl.

In some embodiments of the above embodiments the first end of the flow path comprises at least two apertures opening onto the open ended volume. In some embodiments there are a plurality of apertures which are distributed around the perimeter of the open ended volume at substantially at the same longitudinal positions in the open ended volume.

In some embodiments of the above embodiments the body of the sleeve comprises a first inner wall, a second outer wall, a first open end, and a second closed end, and in which the second closed end comprises an end wall extending between the first inner wall and the second outer wall, the first inner wall and second outer wall are spaced from each other and not connected at the first open end, the first inner wall, second outer wall, and end wall define an internal volume, and the internal volume comprises the flow path.

In some embodiments of the above embodiments there are one or more flow paths and at least one flow path is a passage defined by the sleeve body.

In some embodiments of the above embodiments the open ended volume is substantially parallel sided with a longitudinal axis extending between the open ends of the open ended volume, in which the parallel sides extend longitudinally and the spool moves longitudinally between the closed and open configurations.

In some embodiments of the above embodiments the spool is comprised of an end face and a side wall. The end face of the spool extends across the open ended volume, the side wall of the spool has a first edge that is joined to the end face, and the side wall overlies each aperture opening onto the open ended volume when the spool is in the closed configuration.

In some embodiments of the above embodiments the biasing means of the relief valve acts between the end face of the spool and an abutment surface, and the abutment surface is integral with or attached to the first inner face of the sleeve.

In some embodiments of the above embodiments the biasing means of the relief valve is a helical compression spring.

In some embodiments of the above embodiments the spool does not overlie any of the each aperture opening into the open ended volume.

In some embodiments of the above embodiments one or both of the inlet shutoff valve and the outlet shutoff valve is a flapper valve. For the purposes of the present disclosure a flapper valve is understood to be a valve where a valve element abuts a surface which defines one or more apertures preventing flow of a fluid through the apertures until the valve element is pushed out of contact with the surface by liquid pressure. The valve includes a biasing means biasing the valve element to abut the surface.

In some embodiments of the above embodiments the relief valve of the fuel filter of the present disclosure is formed from stainless steel 4403, the or each biasing means from spring steel, the or each seal element from a suitable fluorocarbon, and the remaining parts from aluminium 6061 or aluminium T651. In other embodiments, other suitable materials may be used to form the parts of the fuel filter.

According to a second aspect of the present disclosure there is provided a fuel supply system for an aircraft comprising a fuel tank, a fuel pump, and a fuel filter according to the first aspect of the present disclosure.

### BRIEF DESCRIPTION OF THE DRAWINGS

The present disclosure will be further described and explained by way of example with reference to the accompanying drawings in which:
Figure 1 shows a perspective view of an embodiment of a fuel filter of the present disclosure;
Figure 2 shows a sectional side view of the fuel filter of Figure 1 when the relief valve is in a closed configuration;
Figure 3 shows a perspective sectional side view of the fuel filter of Figure 1 when the relief valve is in a closed configuration;
Figure 4 shows a detail of Figure 2;
Figure 5 shows a sectional side view of the fuel filter of Figure 1 when the relief valve is in an open configuration;
Figure 6 shows a perspective sectional side view of the fuel filter of Figure 1 when the relief valve is in an open configuration;
Figure 7 shows a detail of Figure 5;
Figure 8 shows a perspective sectional detail of the fuel filter of Figure 1 when the relief valve is in an open configuration;
Figure 9 shows an enlarged sectional view of a fuel filter of Figure 1 when the inlet and outlet shutoff valves are in their open configurations; and
Figure 10 shows an enlarged sectional view of a fuel filter of Figure 1 when the inlet and outlet shutoff valves are in their closed configurations.

### DETAILED DESCRIPTION

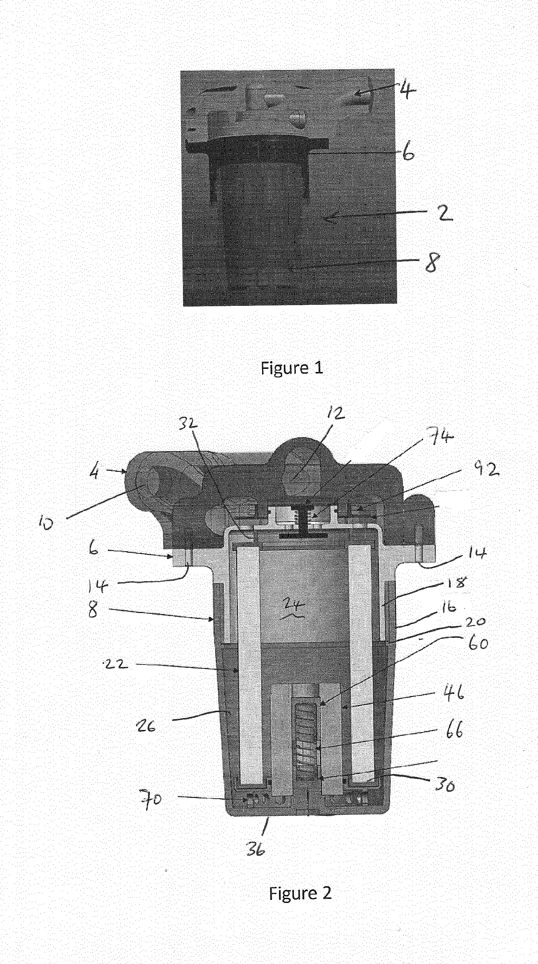

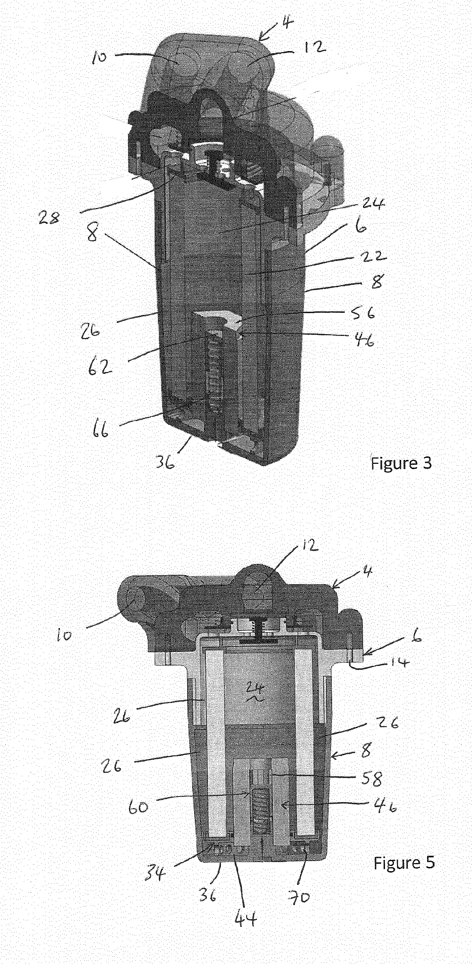

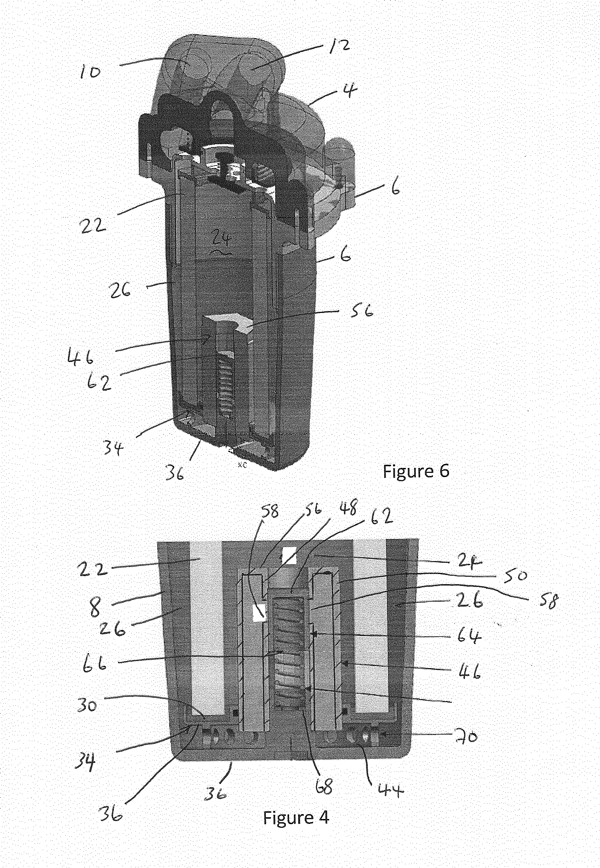

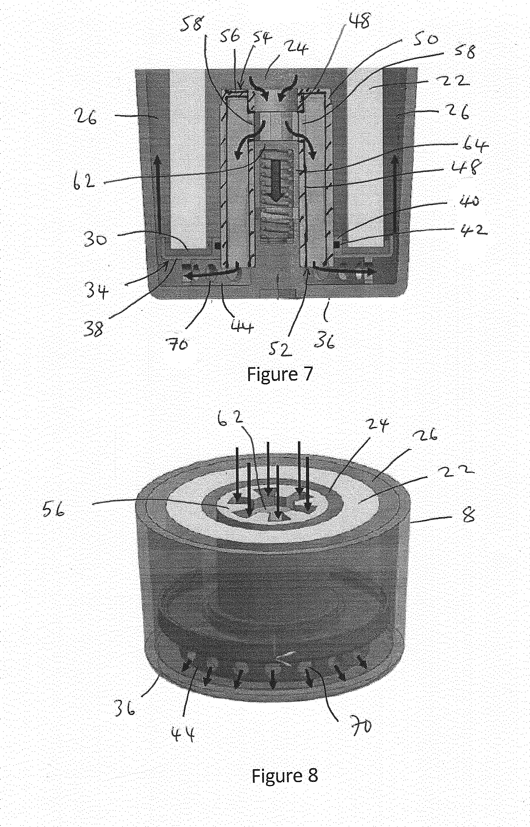

To enhance the clarity of Figures 1 to 10, some of the elements described below and shown in some or all of the Figures are labelled in only some of the Figures.

With reference to Figure 1, a fuel filter 2 is comprised of a manifold 4, to which is attach a connector element 6. Reversibly connected to the connector element 6 is a filter bowl 8.

With reference to Figures 2 to 10, the manifold 4 defines a fuel inlet port 10 and a fuel outlet port 12. The fuel inlet and outlet ports 10, 12 are provided with means (not shown) to engage with the ends of a fuel input line (not shown) and a fuel output line (not shown) respectively.

The connector element 6 is attached to the manifold 4 by a number of bolts 14 with an annular gasket (not shown) between the abutting faces of the connector element 6 and manifold 4.

The filter bowl 8 is adapted to reversibly engage with the connector element 6 via a helical screw thread (not shown) which is formed on the face of a portion of the radially inner face of the filter bowl element 16 and the radially inner face of a connector element portion 18. The screw thread is dimensioned so that filter bowl element 16 may be screwed into the connector element portion 18 until a stop 20 on the filter bowl 8 abuts the edge of the connector element portion 18. When the stop 20 on the filter bowl 8 abuts the connector element 6 a fuel tight seal is formed between the connector element 6 and the filter bowl 8. There are a number of annular seals (not shown) between portions of the filter bowl 8 and the connector element 6 to give rise to the fuel tight seal in a known fashion.

The annular seals are formed of a fluorocarbon that is suitable for high temperatures and which has good chemical resistance, for example Viton (Registered trade mark) GLT which is available from DuPont Performance Elastomers. This is also the material used in connection with other annular seals used in this embodiment of a fuel filter according to the current embodiment of the present disclosure.

The filter bowl 8 is configured and dimensioned to substantially surround a filter element 22. The filter element 22 may be of a known configuration. The filter element 22 is cylindrical and constructed to filter fuel that is flowing radially outwardly from an inlet filter chamber 24 in the inside of the cylinder of the filter element 22 to an outlet filter chamber 26 outside the filter element 22.

The filter 20 is comprised of a cylindrical filter body formed of a suitable filter material, a first end 28, and a second end 30. The first end 28 is adapted to engage with a face of the connector element 6 via an annular fin 32. The annular fin 32 makes a substantially fuel tight seal with the surface of the connector element 6 when impelled toward the connector element 6.

The second end 30 of the filter 22 is adapted to engage with a pedestal 34 adjacent an end face 36 of the filter bowl 8. The pedestal 34 defines an annular U shaped channel and the second end 30 of the filter 22 defines an annular U shaped end adapted to tightly fit into the U shaped channel of the pedestal 34. The fit between the U shaped end and channel is sufficiently tight that the joint between the U shaped end and channel is substantially fuel tight.

In alternative, unillustrated embodiments, one or more seals can be employed between the first and / or second ends 28, 30 of the filter 22 and the connector element 6 / pedestal 34 respectively to form substantially fuel tight seals between them.

The Pedestal 34 is comprised of a pedestal plate 38 which defines the U shaped channel and a circular aperture (not labelled). The aperture is defined by a shoulder 40 of the pedestal plate 38. The shoulder 40 includes a groove (not labelled) in which there is located an annular seal 42.

Projecting from the face of the pedestal plate 38 closes to the end face 36 of the bowl 8 is a circumferential flange 44. The circumstantial flange 44 defines a number of apertures 70 which extend through the circumferential flange 44. The flange 44 spaces the pedestal plate 38 from the end face 36 of the bowl 8. The apertures 70 allow free flow of fuel between the outlet filter chamber 26 and the volume between the pedestal plate 38 and the end face 36 of the bowl 8.

The circular aperture defined by shoulder 40 is configured to accept an end of a cylindrical relief valve. The relief valve comprises a hollow sleeve 46 which has a radially inner wall 48, a radially outer wall 50, a first open sleeve end 52, and a second closed sleeve end 54. The inner wall 48 and outer wall 50 are joined at the second closed sleeve end 54 by an end face 56. The outer wall 50 adjacent the first open sleeve end 52 is within and in contact with the shoulder 40 of the pedestal plate 38 and in sealing engagement with the annular seal 42.

The inner wall 48 of the sleeve 46 defines a number of apertures 58 extending between the volume between the inner and outer walls 48, 50 of the sleeve 46 and the volume defined by the inner wall 48 of the sleeve 46.

The sleeve 46 extends from the contact between the outer sleeve wall 50 and the shoulder 40 into the inlet filter chamber 24 and the first open sleeve end 52 opens onto the volume between the pedestal plate 38 and end face 36 of the bowl 8.

The volume defined by the inner wall 48 is substantially cylindrical and extends from the first open sleeve end 52 (where the volume is in communication with the volume between the pedestal plate 38 and end face 36 of the bowl 8) to the second closed end 54 (where the volume is in communication with the inlet filter chamber 24).

Located within the volume defined by the inner wall 48 of the sleeve 46 is a spool 60, a helical compression spring 66, and a spring abutment 68. The spool 60 has an end face 62 and a spool wall 64. The spool end face 62 is configured and dimensioned to be in sliding contact with the sleeve inner wall 48 and the spool end face 62 is closer to the second closed end 54 of the sleeve 46 than the spool wall 64.

The spool may further include at least one seal means to provide a fuel tight seal between the spool 60 and the sleeve inner wall 48. The at least one seal will also prevent the flow of fuel from the inlet filter chamber 24 and into the apertures 58 when the spool wall 64 overlies the apertures 58.

The helical spring 66 extends within the volume defined by the spool wall 64 and a first end of the spring 66 bears on the face of the spool end face 62 that faces towards the bowl end face 36 and the second end of the spring 66 bears on the spring abutment 68. The helical spring is so dimensioned that it biases the spool 60 to a position where the spool wall 64 overlies the apertures 58 in the sleeve inner wall 48. The spring abutment 68 is configured to allow fuel to flow into the volume defined by the spool wall 64 from the volume between the pedestal plate 38 and end face 36 of the bowl 8.

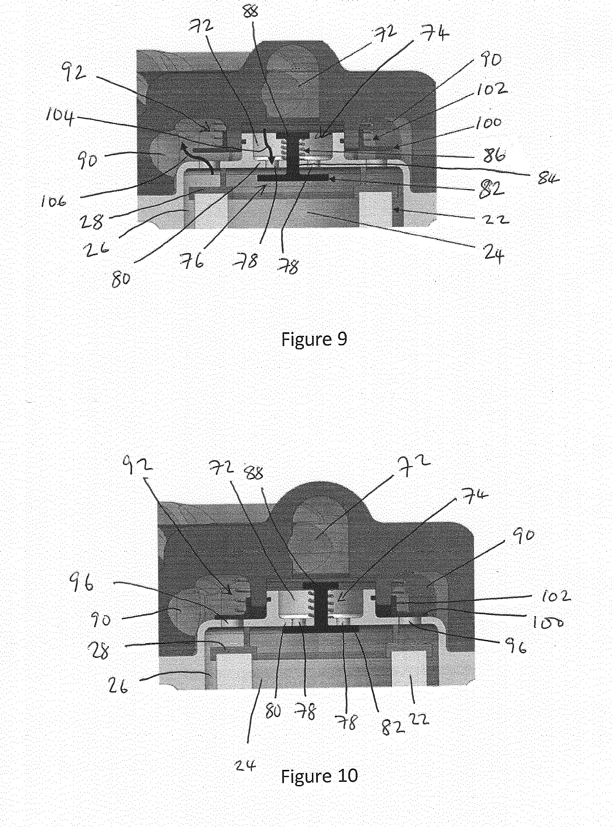

With reference to Figures 9 and 10, the fuel inlet port 10 is in fluid communication with the filter inlet chamber 24 via one or more inlet conduits 72 and an inlet shutoff valve 72. The inlet shutoff valve 74 is a flapper valve and comprises an inlet valve element 76 and a number of inlet apertures 78 defined by an inlet barrier 80 that extends accross the inlet conduit 72. The inlet barrier 80 has a downstream face which is the face closest to the filter inlet chamber 24, and an upstream face which is the face furthest from the filter inlet chamber 24. The inlet valve element 76 comprises an inlet valve head 82 fixed to an inlet stem 84. Surrounding a part of the inlet stem 84 is a helical compression spring 86. The fuel flow direction through the inlet shutoff valve 74 is indicated by the arrow 104.

The inlet valve head 82 overlies the inlet apertures 78 and a portion of the downstream face of the inlet barrier 60. The inlet valve head 82 is configured to form a fuel tight seal with the inlet barrier 80 to prevent the flow of fuel through the apertures 78 when the inlet valve head 82 overlies the inlet apertures 78 and a portion of the downstream face of the inlet barrier 60. The inlet valve stem 84 extends from the inlet valve head 82 through an aperture (not labelled) in the inlet barrier 80 and to a broadened end 88. The helical spring extends between the upstream face of the inlet barrier 80 and the broadened end 88 of the inlet valve stem 84.

The fuel outlet port 12 is in fluid communication with the filter outlet chamber 26 via one or more outlet conduits 90 and an outlet shutoff valve 92. The outlet shutoff valve 92 is a flapper valve and comprises an outlet valve element 94 and a number of outlet apertures 96 defined by an outlet barrier 98 that extends across the outlet conduit 90. The outlet barrier 98 has an upstream face which is the face closest to the filter outlet chamber 26, and a downstream face which is the face furthest from the filter outlet chamber 26. The outlet valve element 94 comprises an outlet valve head 100 and a helical compression spring 102. The fuel flow direction through the outlet shutoff valve 92 is indicated by the arrow 106.

The outlet valve head 100 overlies the outlet apertures 96 and a portion of the downstream face of the outlet barrier 60. The outlet valve head 100 is configured to form a fuel tight seal with the outlet barrier 98 to prevent the flow of fuel through the apertures 96 when the outlet valve head 100 overlies the outlet apertures 94 and a portion of the downstream face of the outlet barrier 98. The helical spring 102 extends between the outlet valve head and a portion of the manifold 4 that is downstream of the outlet valve head.

When the fuel filter 2 is in use, it functions as follows.

When an engine (not shown), for example a gas turbine engine in an aircraft, is started a fuel pump (not shown) is also started and fuel is pumped to the inlet port 10 from a fuel source (not shown), for example a fuel tank in an aircraft, via the fuel pump via a number of conduits (not shown). The fuel is then filtered by the fuel filter 2 and exits the fuel filter 2 via the outlet port 12. The fuel then passes via a number of conduits to the engine that burns the fuel. The engine can demand / require a varying amount of fuel dependent upon the amount of work the engine is doing at any given time.

The fuel entering the inlet port 10 is pressurised by the fuel pump. The fuel passes through the inlet conduit 72 until it encounters the inlet barrier 80. The fuel passes into the inlet apertures 78 and bears upon the upstream side of the inlet valve head 82.

The helical compression spring 86 exerts a spring force to bias the inlet valve head 82 against the downstream face of the inlet barrier 80 which is lower than the force exerted on the upstream face of the inlet valve head 82 by the fuel in the inlet apertures 78. As a result, the inlet valve head 82 is impelled away from the downstream face of the inlet barrier 80 until the increased spring force exerted by the helical spring 86 balances the force on the inlet valve head or the spring reaches maximum compression. Whilst this is happening fuel is flowing into the inlet filter chamber 24.

Whilst the fuel filter 2 is functioning as it is intended to function the fuel will pass through the filter element 22 from the inlet filter chamber 24 to the outlet filter chamber 26 and any solids in the fuel will be trapped in the filter element.

Fuel in outlet filter chamber 26 will mainly flow towards the outlet port 12, but some of the fuel will flow through the apertures 70 in the circumferential flange 44 of the pedestal 34 and into both the volume between the pedestal plate 38 and the end face 36 of the bowl 8, and the volume defined by the end face 62 and wall 64 of the spool 60.

When the fuel in the outlet filter chamber 26 flows towards the outlet port 12 it encounters the outlet barrier 98. The fuel passes into the outlet apertures 96 and bears upon the upstream side of the outlet valve head 100.

The helical compression spring 102 exerts a spring force to bias the outlet valve head 100 against the downstream face of the outlet barrier 98 which is lower than the force exerted on the upstream face of the outlet valve head 100 by the fuel through the outlet apertures 96. As a result, the outlet valve head 100 is impelled away from the downstream face of the outlet barrier 98 until the increased spring force exerted by the helical spring 102 balances the force on the outlet valve head or the spring 102 reaches maximum compression. Whilst this is happening fuel is flowing out of the outlet filter chamber 26, into the outlet conduit 90 and then to outlet port 12.

Whilst the fuel filter 2 is functioning as it is intended to function the fuel will pass through the filter element 22 from the inlet filter chamber 24 to the outlet filter chamber 26 and although the pressure of the fuel within the outlet filter chamber 26 will be attenuated relative to the pressure in the inlet filter chamber 24, that attenuation will be within design criteria. That attenuation or pressure differential results in a net fuel force on the spool end face 64 from the inlet filter chamber 24 towards the spring abutment 68 because the fuel pressure in the inlet filter chamber 24 is greater than the fuel pressure I n the outlet filter chamber 26 (and hence than the fuel pressure in the volume defined by the end face 62 and wall 64 of the spool 60). The net fuel force is the result of the difference in fuel pressures on either side of the spool end face 62. The difference in fuel pressures can be increased by the engine sucking fuel from the fuel filter 2.

Whilst the difference in pressure between the fuel within the outlet filter chamber 26 and within the inlet filter chamber 24 is within the design criteria, the net fuel force is lower than the spring force of the helical compression spring 66 exerted on the spool end face 64 from the spring abutment 68 toward the inlet filter chamber 24.

As the fuel filter 2 is used, the filter element 22 will become increasingly clogged by material it has filtered out of the fuel. As that happens the difference between the fuel pressure within the outlet filter chamber 26 and the pressure in the inlet filter chamber 24 will increase. As the difference increases so does the net fuel force exerted on the spool end face 64 from the inlet filter chamber 24 towards the spring abutment 68.

If the difference between the fuel pressure in the inlet filter chamber 24 and the outlet filter chamber 26 increases to too high a level there is a risk that the engine will receive insufficient fuel to meet its demands. The compression spring 102 is so configured that the spring force it exerts on the spool end face 64 when the difference in fuel pressures either side of the filter element 22 exceeds a predetermined level. When that occurs, the spool 60 is impelled towards the spring abutment 68 by the net fuel force and the spool wall 64 will cease to cover and seal the apertures 58 in the sleeve inner wall 48. Fuel will then flow from the inlet filter chamber 24 into the space between the sleeve inner wall 48 and the sleeve outer wall 50, into the volume between the pedestal plate 38 and the end face 36 of the bowl 8, through the apertures 70 in the circumferential flange 44 of the pedestal 34, and into the outlet filter chamber 26 at a flow rate that is greater than the flow rate that was being achieved through the filter element 22. The engine will then receive sufficient fuel to meet is demands.

When the engine is turned off the fuel pump is likewise turned off and the fuel in the fuel filter and the conduits leading to the fuel filter will cease to be pressurised. The helical springs 86, 102 of the inlet and outlet shutoff valves 74, 92 will then impel the inlet and outlet valve heads 84, 100 against the downstream faces of the inlet and outlet barriers 80, 98 and seal the inlet and outlet apertures 78, 96. If the spool 60 was in a position where the spool wall 64 was not completely sealing the apertures 58 in the sleeve inner wall 48, the spring 66 will impel the spool 60 to a position where the apertures 58 are sealed by the spool wall 64.

When the engine and fuel pump are turned off, the bowl 8 of the fuel filter 2 can be disconnected from the connector element 6 to allow the filter element 22 to be serviced or replaced if that is required. The inlet and outlet shutoff valves 74, 92 will prevent fuel exiting the inlet and outlet conduits 72, 90 and hence minimise the time and disruption associated with servicing or replacing the filter element 22.

Various aspects of the fuel filters disclosed in the various embodiments may be used alone, in combination, or in a variety of arrangements not specifically discussed in the embodiments described in the foregoing.

For example, aspects described in one embodiment may be combined in any manner with aspects described in other embodiments.

## Claims

1. A fuel filter (2) comprising a manifold (4), a connector element (6), a filter bowl (8), a filter element (22), an inlet shutoff valve (74) , an outlet shutoff valve (92), an inlet port (10), an inlet conduit (72), an outlet port (12), an outlet conduit (90) and a relief valve in which
the connector element (6) is fixed to the manifold (4), and the filter bowl (8) is reversibly fixed to the connector element (6),
the connector element (6) is adapted to engage with the filter element (22), the filter bowl (8) is adapted to reversibly receive the filter element (22) and is so configured that when the filter element (22) is located within the filter bowl (8) and the filter bowl (8) attached to the connector element (6) the filter element (22) divides the space defined by the connector element (6) and filter bowl (8) into an inlet filter chamber (24) and an outlet filter chamber (26),
the inlet port (10) is incorporated in the manifold (4), and the inlet port (10) and inlet filter chamber (24) are in fluid communication via the inlet conduit (72),
the outlet port (12) is incorporated in the manifold (4) and the outlet port (12) and outlet filter chamber (26) are in fluid communication via the outlet conduit (90),
**characterised in that**
the inlet shutoff valve (74) is biased by a biasing means (86) into a closed configuration which prevents fuel flowing along the inlet conduit (72) when fuel in the inlet conduit (72) has a fuel pressure below a predetermined value,
the outlet shutoff valve (92) is biased by a biasing means (66) into a closed configuration which prevents fuel flowing along the outlet conduit (90) when fuel in the outlet filter chamber (26) has a fuel pressure below a predetermined value,
the relief valve is biased by a biasing means (66) into a closed configuration in which fuel flowing between the inlet filter chamber (24) and outlet filter chamber (26) passes through the filter element (22), and movement of the relief valve into an open configuration allows fuel to flow between the inlet filter chamber (24) and the outlet filter chamber (26) via the relief valve without the fuel passing through the filter element (22), and
the relief valve is caused to move into its open configuration from its closed configuration when the difference between the fuel pressure in the filter inlet chamber (24) and the filter outlet chamber (26) is equal to or greater than a predetermined value.

2. A fuel filter (2) according to claim 1 in which the fuel filter (2) further comprises a pedestal (34), in which
the filter element (22) has a first end (28) which is adapted to engage with the connector element (6) and a second end (30) which is adapted to engage with the pedestal (34),
the pedestal (34) is so configured that it spaces the second end (30) of the filter (22) from the filter bowl (8) and permits the flow of fuel between the outlet filter chamber (26) and the volume between the second end (30) of the filter (22) and the bowl 8.

3. A fuel filter (2) according to claim 2 in which the relief valve is also engaged with the pedestal (34) and fuel flowing between the inlet filter chamber (24) and the outlet filter chamber (26) via the relief valve flows through the volume between the second end (30) of the filter (22) and the bowl 8.

4. A fuel filter (2) according to any of claims 1 to 3 in which the relief valve comprises a sleeve (46), a spool (60), and the biasing means (66), in which the sleeve (46) defines an open ended volume,
the sleeve (46) is formed from a sleeve body in which at least one flow path extends through the sleeve body between a first end which comprises a first aperture (58) opening onto the open ended volume and a second end which comprises an aperture opening out of the sleeve body at a position spaced from the first aperture (58),
the spool (60) is configured to be a sliding fit with the face of the sleeve (46) defining at least part of the open ended volume, and
movement of the spool (60) from a first position in the open ended volume in which it fully overlies the first aperture (58) to a second position in the open ended volume in which the spool (60) does not fully overlie the aperture (58) is movement of the relief valve from a closed configuration to an open configuration.

5. A fuel filter (2) according to claim 4 in which the aperture (58) at the first end of the flow path is close to but spaced from one end of the sleeve body, and the second end of the flow path opens out of the other end of the sleeve body.

6. A fuel filter (2) according to claim 4 when dependent on claim 3 in which the sleeve (46) is longitudinally extending from the pedestal (34) into the inlet filter chamber (24), the aperture (58) at the first end of the flow path is close to but spaced from the end of the sleeve (46) within the inlet filter aperture (24), and the second end of the flow path opens out of the end of the sleeve body engaged with the pedestal (34).

7. A fuel filter (2) according to any of claims 4 to 6 in which the first end of the flow path comprises at least two apertures (58) opening onto the open ended volume.

8. A fuel filter (2) according to any of claims 4 to 7 in which the body of the sleeve comprises a first inner wall (48), a second outer wall (50), a first open end (52), and a second closed end (54),
and in which the second closed end comprises an end wall (56) extending between the first inner wall (48) and the second outer wall (50),
the first inner wall (48) and second outer wall (50) are spaced from each other and not connected at the first open end (52),
the first inner wall (48), second outer wall (50), and end wall (56) define an internal volume, and the internal volume comprises the flow path.

9. A fuel filter (2) according to any of claims 4 to 8 in which the open ended volume is substantially parallel sided with a longitudinal axis extending between the open ends of the volume, in which the parallel sides extend longitudinally and the spool (60) moves longitudinally between the closed and open configurations.

10. A fuel filter (2) according to any of claims 4 to 9 in which the spool (60) is comprised of an end face (62) and a side wall (64), the end face (62) of the spool (60) extends across the open ended volume, the side wall (64) of the spool (60) has a first edge that is joined to the end face (62), and the side wall (64) overlies each aperture (58) opening onto the open ended volume when the spool (60) is in the closed configuration.

11. A fuel filter (2) according to claim 10 in which the biasing means (66) of the relief valve acts between the end face (62) of the spool (60) and an abutment surface (68), and the abutment surface (68) is integral with or attached to the first inner face of the sleeve (46).

12. A fuel filter (2) according to any of claims 1 to 11 in which the biasing means (66) of the relief valve is a helical compression spring.

13. A fuel filter (2) according to any of claims 4 to 11 in which the spool (60) does not overlie any of the each aperture (58) opening into the open ended volume when in a fully open configuration.

14. A fuel filter (2) according to any of claims 1 to 13 in which one or both of the inlet shutoff valve (74) and the outlet shutoff valve (92) is a flapper valve.

15. A fuel supply system for an aircraft comprising a fuel tank, a fuel pump, and a fuel filter (2) according to any of claims 1 to 14.

## Patentansprüche

1. Kraftstofffilter (2), umfassend einen Verteiler (4), ein Verbindungselement (6), einen Filtertopf (8), ein Filterelement (22), ein Einlassabsperrventil (74), ein Auslassabsperrventil (92), einen Einlassanschluss (10), eine Einlassleitung (72), einen Auslassanschluss (12), eine Auslassleitung (90) und ein Überdruckventil, wobei
das Anschlusselement (6) an dem Verteiler (4) befestigt ist, und der Filtertopf (8) reversibel an dem Verbindungselement (6) befestigt ist,
wobei das Verbindungselement (6) angepasst ist, um mit dem Filterelement (22) in Eingriff zu kommen, der Filtertopf (8) angepasst ist, um das Filterelement (22) reversibel aufzunehmen und so konfiguriert ist, dass, wenn das Filterelement (22) innerhalb des Filtertopfs (8) angeordnet ist und der Filtertopf (8) an dem Verbindungselement (6) befestigt ist, das Filterelement (22) den durch das Verbindungselement (6) und den Filtertopf (8) definierten Raum in eine Einlassfilterkammer (24) und eine Auslassfilterkammer (26) unterteilt,
der Einlassanschluss (10) in den Verteiler (4) integriert ist, und der Einlassanschluss (10) und die Einlassfilterkammer (24) über die Einlassleitung (72) in Fluidverbindung stehen,
der Auslassanschluss (12) in den Verteiler (4) integriert ist und der Auslassanschluss (12) und die Auslassfilterkammer (26) über die Auslassleitung (90) in Fluidverbindung stehen, **dadurch gekennzeichnet, dass**
das Einlassabsperrventil (74) durch ein Vorspannmittel (86) in eine geschlossene Konfiguration vorgespannt ist, die verhindert, dass Kraftstoff entlang der Einlassleitung (72) fließt, wenn der Kraftstoff in der Einlassleitung (72) einen Kraftstoffdruck unterhalb eines vorbestimmten Wertes aufweist, das Auslassabsperrventil (92) durch ein Vorspannmittel (66) in eine geschlossene Konfiguration vorgespannt ist, die verhindert, dass Kraftstoff entlang der Auslassleitung (90) fließt, wenn der Kraftstoff in der Auslassfilterkammer (26) einen Kraftstoffdruck unterhalb eines vorbestimmten Wertes aufweist,
das Überdruckventil durch ein Vorspannmittel (66) in eine geschlossene Konfiguration vorgespannt ist, in der Kraftstoff, der zwischen der Einlassfilterkammer (24) und der Auslassfilterkammer (26) strömt, durch das Filterelement (22) hindurchläuft, und eine Bewegung des Überdruckventils in eine offene Konfiguration ermöglicht, dass Kraftstoff zwischen der Einlassfilterkammer (24) und der Auslassfilterkammer (26) über das Überdruckventil strömt, ohne dass der Kraftstoff durch das Filterelement (22) hindurchläuft, und
das Überdruckventil veranlasst wird, sich von seiner geschlossenen Konfiguration in seine offene Konfiguration zu bewegen, wenn die Differenz zwischen dem Kraftstoffdruck in der Filtereinlasskammer (24) und der Filterauslasskammer (26) gleich oder größer als ein vorbestimmter Wert ist.

2. Kraftstofffilter (2) nach Anspruch 1, wobei der Kraftstofffilter (2) ferner einen Sockel (34) umfasst, bei dem das Filterelement (22) ein erstes Ende (28) aufweist, das angepasst ist, um mit dem Verbindungselement (6) in Eingriff zu kommen, und ein zweites Ende (30), das angepasst ist, um mit dem Sockel (34) in Eingriff zu kommen,
der Sockel (34) so konfiguriert ist, dass er das zweite Ende (30) des Filters (22) von dem Filtertopf (8) beabstandet und den Kraftstofffluss zwischen der Auslassfilterkammer (26) und dem Volumen zwischen dem zweiten Ende (30) des Filters (22) und dem Filtertopf (8) zulässt.

3. Kraftstofffilter (2) nach Anspruch 2, wobei das Überdruckventil ebenfalls mit dem Sockel (34) in Eingriff steht und der zwischen der Einlassfilterkammer (24) und der Auslassfilterkammer (26) über das Überdruckventil strömende Kraftstoff das Volumen zwischen dem zweiten Ende (30) des Filters (22) und dem Topf 8 durchströmt.

4. Kraftstofffilter (2) nach einem der Ansprüche 1 bis 3, wobei das Überdruckventil eine Hülse (46), einen Schieber (60) und das Vorspannmittel (66) umfasst, wobei die Hülse (46) ein Volumen mit offenem Ende definiert,
die Hülse (46) aus einem Hülsenkörper gebildet ist, wobei sich mindestens ein Strömungsweg durch den Hülsenkörper zwischen einem ersten Ende, das eine erste Öffnung (58) umfasst, die sich in das Volumen mit offenem Ende öffnet, und einem zweiten Ende, das eine Öffnung umfasst, die sich an einer von der ersten Öffnung (58) beabstandeten Position aus dem Hülsenkörper heraus öffnet, erstreckt,
die Spule (60) so konfiguriert ist, dass sie eine Gleitpassung mit der Fläche der Hülse (46) bildet, die mindestens einen Teil des Volumens mit offenem Ende definiert, und
die Bewegung der Spule (60) von einer ersten Position in dem Volumen mit offenem Ende, in der sie die erste Öffnung (58) vollständig überdeckt, zu einer zweiten Position in dem Volumen mit offenem Ende, wobei die Spule (60) die Öffnung (58) nicht vollständig überdeckt, eine Bewegung des Überdruckventils von einer geschlossenen Konfiguration zu einer offenen Konfiguration ist.

5. Kraftstofffilter (2) nach Anspruch 4, wobei die Öffnung (58) an dem ersten Ende des Strömungsweges nahe an einem Ende des Hülsenkörpers liegt, aber davon beabstandet ist, und das zweite Ende des Strömungsweges aus dem anderen Ende des Hülsenkörpers herausführt.

6. Kraftstofffilter (2) nach Anspruch 4 in Abhängigkeit von Anspruch 3, wobei sich die Hülse (46) in Längsrichtung von dem Sockel (34) in die Einlassfilterkammer (24) erstreckt, die Öffnung (58) an dem ersten Ende des Strömungsweges in der Nähe des Endes der Hülse (46) innerhalb der Einlassfilteröffnung (24) liegt, aber davon beabstandet ist, und das zweite Ende des Strömungsweges aus dem Ende des Hülsenkörpers herausführt, das mit dem Sockel (34) in Eingriff steht.

7. Kraftstofffilter (2) nach einem der Ansprüche 4 bis 6, wobei das erste Ende des Strömungsweges mindestens zwei Öffnungen (58) umfasst, die in das Volumen mit offenem Ende münden.

8. Kraftstofffilter (2) nach einem der Ansprüche 4 bis 7, wobei der Körper der Hülse eine erste innere Wand (48), eine zweite äußere Wand (50), ein erstes offenes Ende (52) und ein zweites geschlossenes Ende (54) umfasst,
und wobei das zweite geschlossene Ende eine Endwand (56) umfasst, die sich zwischen der ersten inneren Wand (48) und der zweiten äußeren Wand (50) erstreckt,
die erste innere Wand (48) und die zweite äußere Wand (50) voneinander beabstandet und an dem ersten offenen Ende (52) nicht verbunden sind,
die erste innere Wand (48), die zweite äußere Wand (50) und die Endwand (56) ein Innenvolumen definieren und das Innenvolumen den Strömungsweg umfasst.

9. Kraftstofffilter (2) nach einem der Ansprüche 4 bis 8, wobei das Volumen mit offenem Ende im Wesentlichen parallele Seiten hat und sich eine Längsachse zwischen den offenen Enden des Volumens erstreckt, wobei sich die parallelen Seiten in Längsrichtung erstrecken und sich die Spule (60) in Längsrichtung zwischen den geschlossenen und offenen Konfigurationen bewegt.

10. Kraftstofffilter (2) nach einem der Ansprüche 4 bis 9, wobei die Spule (60) in einer Endfläche (62) und einer Seitenwand (64) umfasst ist, wobei sich die Endfläche (62) der Spule (60) über das Volumen mit offenem Ende erstreckt, die Seitenwand (64) der Spule (60) eine erste Kante aufweist, die mit der Endfläche (62) verbunden ist, und die Seitenwand (64) über jeder Öffnung (58) liegt, die sich in das Volumen mit offenem Ende öffnet, wenn die Spule (60) in der geschlossenen Konfiguration ist.

11. Kraftstofffilter (2) nach Anspruch 10, wobei das Vorspannmittel (66) des Überdruckventils zwischen der Endfläche (62) der Spule (60) und einer Anschlagfläche (68) wirkt und die Anschlagfläche (68) mit der ersten Innenfläche der Hülse (46) einstückig ist oder daran befestigt ist.

12. Kraftstofffilter (2) nach einem der Ansprüche 1 bis 11, wobei das Vorspannmittel (66) des Überdruckventils eine Schraubendruckfeder ist.

13. Kraftstofffilter (2) nach einem der Ansprüche 4 bis 11, wobei die Spule (60) nicht über einer der Öffnungen (58) liegt, die sich in das Volumen mit offenem Ende öffnen, wenn sie vollständig geöffnet sind.

14. Kraftstofffilter (2) nach einem der Ansprüche 1 bis 13, wobei eines oder beide von dem Einlassabsperrventil (74) und dem Auslassabsperrventil (92) ein Klappenventil ist/sind.

15. Kraftstoffversorgungssystem für ein Luftfahrzeug, umfassend einen Kraftstofftank, eine Kraftstoffpumpe und einen Kraftstofffilter (2) nach einem der Ansprüche 1 bis 14.

## Revendications

1. Filtre à carburant (2) comprenant un collecteur (4), un élément de connexion (6), un bol filtrant (8), un élément filtrant (22), une vanne d'arrêt d'entrée (74), une vanne d'arrêt de sortie (92), un orifice d'entrée (10), un conduit d'entrée (72), un orifice de sortie (12), un conduit de sortie (90) et une vanne de décharge dans laquelle
élément de connexion (6) est fixé au collecteur (4), et le bol filtrant (8) est fixé de manière réversible à élément de connexion (6),
élément de connexion (6) est adapté pour venir en prise avec l'élément filtrant (22), le bol filtrant (8) est adapté pour recevoir, de manière réversible, l'élément filtrant (22) et est ainsi est configuré de sorte que lorsque l'élément filtrant (22) est situé à l'intérieur du bol filtrant (8) et que le bol filtrant (8) est fixé à élément de connexion (6), l'élément filtrant (22) divise l'espace défini par élément de connexion (6) et le bol filtrant (8) en une chambre de filtre d'entrée (24) et une chambre de filtre de sortie (26), l'orifice d'entrée (10) est incorporé dans le collecteur (4), et l'orifice d'entrée (10) et la chambre de filtre d'entrée (24) sont en communication fluidique à travers le conduit d'entrée (72),
l'orifice de sortie (12) est incorporé dans le collecteur (4) et l'orifice de sortie (12) et la chambre de filtre de sortie (26) sont en communication fluidique à travers le conduit de sortie (90),
**caractérisé en ce que**
la vanne d'arrêt d'entrée (74) est sollicitée par un moyen de sollicitation (86) dans une configuration fermée qui empêche le carburant de s'écouler le long du conduit d'entrée (72) lorsque le carburant dans le conduit d'entrée (72) a une pression de carburant inférieure à une valeur prédéterminée,
la vanne d'arrêt de sortie (92) est sollicitée par un moyen de sollicitation (66) dans une configuration fermée qui empêche le carburant de s'écouler le long du conduit de sortie (90) lorsque le carburant dans la chambre de filtre de sortie (26) a une pression de carburant inférieure à une valeur prédéterminée,
la vanne de décharge est sollicitée par un moyen de sollicitation (66) dans une configuration fermée dans laquelle le carburant circulant entre la chambre de filtre d'entrée (24) et la chambre de filtre de sortie (26) passe à travers l'élément filtrant (22), et le mouvement de la vanne de décharge dans une configuration ouverte, le carburant peut s'écouler entre la chambre de filtre d'entrée (24) et la chambre de filtre de sortie (26) à travers la vanne de décharge sans que le carburant ne passe à travers l'élément filtrant (22), et
la vanne de décharge est amenée à passer de sa configuration fermée à sa configuration ouverte lorsque la différence entre la pression du carburant dans la chambre d'entrée du filtre (24) et la chambre de sortie du filtre (26) est égale ou supérieure à une valeur prédéterminée.

2. Filtre à carburant (2) selon la revendication 1, dans lequel le filtre à carburant (2) comprend en outre un socle (34), dans lequel
l'élément filtrant (22) a une première extrémité (28) qui est adaptée pour venir en prise avec l'élément de connexion (6) et une seconde extrémité (30) qui est adaptée pour venir en prise avec le socle (34),
le socle (34) est configuré de sorte qu'il espace la seconde extrémité (30) du filtre (22) du bol filtrant (8) et permet l'écoulement du carburant entre la chambre de filtre de sortie (26) et le volume entre la seconde extrémité (30) du filtre (22) et le bol 8.

3. Filtre à carburant (2) selon la revendication 2, dans lequel la vanne de décharge est également en prise avec le socle (34) et le carburant circulant entre la chambre de filtre d'entrée (24) et la chambre de filtre de sortie (26) à travers la vanne de décharge s'écoule à travers le volume compris entre la seconde extrémité (30) du filtre (22) et le bol 8.

4. Filtre à carburant (2) selon l'une quelconque des revendications 1 à 3, dans lequel la vanne de décharge comprend un manchon (46), une bobine (60) et les moyens de sollicitation (66), dans lesquels le manchon (46) définit un volume à extrémité ouverte,
le manchon (46) est formé à partir d'un corps de manchon dans lequel au moins un trajet d'écoulement s'étend à travers le corps de manchon entre une première extrémité qui comprend une première ouverture (58) s'ouvrant sur le volume à extrémité ouverte et une seconde extrémité qui comprend une ouverture d'ouverture hors du corps de manchon à une position espacée de la première ouverture (58),
la bobine (60) est configurée pour être ajustée par coulissement avec la face du manchon (46) définissant au moins une partie du volume à extrémité ouverte, et
le mouvement de la bobine (60) depuis une première position dans le volume à extrémité ouverte dans laquelle elle recouvre entièrement la première ouverture (58) jusqu'à une seconde position dans le volume à extrémité ouverte dans laquelle la bobine (60) ne recouvre pas complètement l'ouverture (58) est le mouvement de la vanne de décharge d'une configuration fermée à une configuration ouverte.

5. Filtre à carburant (2) selon la revendication 4, dans lequel l'ouverture (58) à la première extrémité du trajet d'écoulement est proche mais espacée d'une extrémité du corps de manchon, et la seconde extrémité du trajet d'écoulement s'ouvre de l'autre extrémité du corps de manchon.

6. Filtre à carburant (2) selon la revendication 4 lorsqu'elle dépend de la revendication 3, dans lequel le manchon (46) s'étend longitudinalement depuis le socle (34) dans la chambre de filtre d'entrée (24), l'ouverture (58) à la première extrémité du trajet d'écoulement est proche mais espacée de l'extrémité du manchon (46) à l'intérieur de l'ouverture du filtre d'entrée (24), et la seconde extrémité du trajet d'écoulement s'ouvre à partir de l'extrémité du corps de manchon en prise avec le socle (34).

7. Filtre à carburant (2) selon l'une quelconque des revendications 4 à 6, dans lequel la première extrémité du trajet d'écoulement comprend au moins deux ouvertures (58) s'ouvrant sur le volume à extrémité ouverte.

8. Filtre à carburant (2) selon l'une quelconque des revendications 4 à 7, dans lequel le corps du manchon comprend une première paroi interne (48), une seconde paroi externe (50), une première extrémité ouverte (52) et une seconde extrémité fermée (54),
et dans lequel la seconde extrémité fermée comprend une paroi d'extrémité (56) s'étendant entre la première paroi interne (48) et la seconde paroi externe (50),
la première paroi interne (48) et la seconde paroi externe (50) sont espacées l'une de l'autre et ne sont pas reliées au niveau de la première extrémité ouverte (52),
la première paroi interne (48), la seconde paroi externe (50) et la paroi d'extrémité (56) définissent un volume interne, et le volume interne comprend le trajet d'écoulement.

9. Filtre à carburant (2) selon l'une quelconque des revendications 4 à 8, dans lequel le volume à extrémité ouverte a des côtés sensiblement parallèles avec un axe longitudinal s'étendant entre les extrémités ouvertes du volume, dans lequel les côtés parallèles s'étendent longitudinalement et la bobine (60) se déplace longitudinalement entre les configurations fermée et ouverte.

10. Filtre à carburant (2) selon l'une quelconque des revendications 4 à 9, dans lequel la bobine (60) est constituée d'une face d'extrémité (62) et d'une paroi latérale (64), la face d'extrémité (62) de la bobine (60) s'étend à travers le volume à extrémité ouverte, la paroi latérale (64) de la bobine (60) présente un premier bord qui est relié à la face d'extrémité (62), et la paroi latérale (64) recouvre chaque ouverture (58) s'ouvrant sur le volume à extrémité ouverte lorsque la bobine (60) est dans la configuration fermée.

11. Filtre à carburant (2) selon la revendication 10, dans lequel le moyen de sollicitation (66) de la vanne de décharge agit entre la face d'extrémité (62) de la bobine (60) et une surface de butée (68), et la surface de butée (68) est solidaire ou fixé à la première face interne du manchon (46).

12. Filtre à carburant (2) selon l'une quelconque des revendications 1 à 11, dans lequel le moyen de sollicitation (66) de la vanne de décharge est un ressort hélicoïdal de compression.

13. Filtre à carburant (2) selon l'une quelconque des revendications 4 à 11, dans lequel la bobine (60) ne recouvre aucune des ouvertures (58) s'ouvrant dans le volume à extrémité ouverte lorsqu'il est dans une configuration complètement ouverte.

14. Filtre à carburant (2) selon l'une quelconque des revendications 1 à 13, dans lequel l'une ou les deux parmi la vanne d'arrêt d'entrée (74) et la vanne d'arrêt de sortie (92) est une vanne à clapet.

15. Système d'alimentation en carburant pour un aéronef comprenant un réservoir de carburant, une pompe à carburant et un filtre à carburant (2) selon l'une quelconque des revendications 1 à 14.
